(19) **Europäisches Patentamt**
**European Patent Office**
**Office européen des brevets**

(11) **EP 3 628 998 A1**

(12) **EUROPÄISCHE PATENTANMELDUNG**

(43) Veröffentlichungstag:
01.04.2020 Patentblatt 2020/14

(51) Int Cl.:
*G01M 13/045* (2019.01)    *G01N 29/14* (2006.01)
*G01N 29/40* (2006.01)    *G01N 29/44* (2006.01)

(21) Anmeldenummer: 19198856.7

(22) Anmeldetag: 23.09.2019

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: 25.09.2018 DE 102018123571

(71) Anmelder: **Rolls-Royce Deutschland Ltd & Co KG 15827 Blankenfelde-Mahlow (DE)**

(72) Erfinder:
• **NOWOISKY, Sebastian**
**15827 Blankenfelde-Mahlow (DE)**
• **MOKHTARI MOLK ABADI, Noushin**
**10963 Berlin (DE)**
• **GRZESZKOWSKI, Mateusz**
**12347 Berlin (DE)**

(74) Vertreter: **Maikowski & Ninnemann Patentanwälte Partnerschaft mbB Postfach 15 09 20 10671 Berlin (DE)**

(54) **VERFAHREN UND VORRICHTUNG ZUR SCHÄTZUNG DES VERSCHLEISSZUSTANDES EINES GLEITLAGERS**

(57)    Die Erfindung betrifft ein Verfahren zur Schätzung des Verschleißzustandes eines Gleitlagers (1) mit einer darin gelagerten, insbesondere darin drehenden Welle (6), wobei mindestens ein zeitabhängiges Körperschallsignal (S) des Gleitlagers (1) von mindestens einem Körperschallsensor (3), insbesondere genau einem Körperschallsensor (3) aufgenommen wird, gekennzeichnet durch

a) eine Ermittlung (201, 202, 203) des zeitlichen Verlaufs mindestens eines Reibungsereignisses (a, b, c, d) aus dem Körperschallsignal (S) mittels eines mathematischen Reibungsereignismodells (R),

b) eine Bestimmung (204) eines Maßes (M), das mindestens ein Reibungsereignis basierend auf der zeitlichen Dauer ($T_a$, $T_b$, $T_c$, $T_d$) des mindestens einen Reibungsereignisses (a, b, c, d), der Amplitude ($A_a$, $A_b$, $A_c$, $A_d$) des mindestens einen Reibungsereignisses (a, b, c, d) und / oder eines Integralmaßes ($I_a$, $I_b$, $I_c$,) über das mindestens eine Reibungsereignis (a, b, c, d) charakterisiert,

c) Kombination (205) des über die Zeit akkumulierten Maßes (M) mit einer Winkelangabe ($\varphi(t)$) für das mindestens eine Reibungsereignis (a, b, c, d) am Umfang des Gleitlagers (1) zur Bestimmung eines räumlich aufgelösten Verschleißmodells (W) des Gleitlagers (1), wobei das räumlich aufgelöste Verschleißmodell (W) durch einen Schätzfilter gewonnen wird, und

d) Ausgabe (206) eines Signals (D) in Abhängigkeit vom Verschleißmodell (W) zur Charakterisierung des Verschleißzustands. Die Erfindung betrifft auch eine Vorrichtung zur Überwachung eines Gleitlagers (1).

Fig. 2

EP 3 628 998 A1

**Beschreibung**

Die Erfindung betrifft ein Verfahren zur Schätzung des Verschleißzustandes eines Gleitlagers mit den Merkmalen des Anspruchs 1 und eine Vorrichtung zur Schätzung des Verschleißzustandes eines Gleitlagers mit den Merkmalen des Anspruchs 14.

Gleitlager sind ein vielzeitig einsetzbares Maschineelement, bei dem die Relativbewegung zwischen einer Welle und der Lagerschale des Gleitlagers bzw. einem Zwischenmedium eine Gleitbewegung ist.

Ein Einsatzgebiet für Gleitlager ist z.B. die Lagerung von Planetenrädern in Planetengetrieben, die in Turbofan-Flugzeugtriebwerken eingesetzt werden oder werden sollen.

Die Anforderungen an neue Triebwerke hinsichtlich Treibstoffverbrauch, $CO_2$-Ausstoß und Schallemission erhöhen sich kontinuierlich, so dass die Triebwerkskomponenten stetig weiterentwickelt werden müssen. In zukünftigen Mantelstromtriebwerken sollen zu diesem Zweck der Verdichter und die Turbine durch den Einsatz eines Hochleistungsplanetengetriebes vom Fan entkoppelt werden. Dadurch können ·diese Komponenten in ihren jeweiligen optimalen Betriebspunkten betrieben werden. Die so mögliche geringere Drehzahl des Fans erlaubt eine Erhöhung des Fandurchmessers, was zu einem höheren Bypass-Massenstrom führt, ohne dabei Überschall an den Fanspitzen zu erzeugen.

In den Hochleistungsgetrieben werden Planetengetriebe eingesetzt, deren Bauteile, wie z.B. Zahnräder, Wellen und Lager, potentielle Verschleißteile darstellen. Ein Ausfall dieser Bauteile kann gravierende Auswirkungen auf das gesamte Flugzeugtriebwerk haben. Dabei spielen Reibungsereignisse, (Festkörperreibungsereignisse, Mischreibungsereignisse) in Gleitlagern eine große Rolle, da sie anzeigen, dass sich die Schmierung aus dem gewünschten Flüssigkeitsreibungsbereich entfernt hat.

Aus diesem Grund werden Verfahren und Vorrichtungen benötigt, um den Betrieb von Gleitlagern sicher zu gestalten. Dazu gehört insbesondere auch, den Verschleißgrad des Gleitlagers schätzen, da dieser sich im Betrieb einer direkten Beobachtung entzieht.

Dieser Aspekt wird durch ein Verfahren mit den Merkmalen des Anspruchs 1 adressiert.

Es wird ein Verfahren zur Schätzung des Verschleißzustandes eines Gleitlagers eingesetzt, wobei mindestens ein zeitabhängiges Körperschallsignal von mindestens einem Körperschallsensor, insbesondere genau einem Körperschallsensor vom Gleitlager aufgenommen wird.

Zunächst erfolgt eine Ermittlung des zeitlichen Verlaufs mindestens eines Reibungsereignisses im Gleitlager aus dem Körperschallsignal mittels eines mathematischen Reibungsereignismodells (z.B. unter Verwendung eines Hüllkurvenmodells).

Anschließend erfolgt eine Bestimmung eines Maßes, das das mindestens eine Reibungsereignis basierend auf der zeitlichen Dauer des mindestens einen Reibungsereignisses, der Amplitude des mindestens einen Reibungsereignisses und / oder eines Integralmaßes über das mindestens eine Reibungsereignis charakterisiert.

Dann wird eine Kombination des über die Zeit akkumulierten Maßes mit einer Winkelangabe $\varphi(t)$ für das mindestens eine Reibungsereignis am Umfang des Gleitlagers vorgenommen, mit der ein räumlich aufgelöstes Verschleißmodells des Gleitlagers ermittelt wird. Dieses Modell umfasst die Angabe des Ortes der Reibungsereignisse (z.B. als Anhaltspunkt für einen Schadensort) und der Intensität (z.B. als Anhaltspunkt für das Ausmaß des Schadens). Die Intensität kann sich z.B. aus der Amplitude ergeben.

Schließlich erfolgt die Ausgabe eines Signals in Abhängigkeit vom Verschleißmodell zur Charakterisierung des Verschleißzustands. Dies kann z.B. in Form einer Warnung geschehen, dass eine Wartung vorgenommen werden soll. Damit kann anhand einer ermittelbaren 3D-Auflösung des Verschleißgrades eine Aussage über die verbleibende Lebensdauer getroffen werden. Dies kann z.B. mit Hilfe von statistischen Verfahren (z.B. Kalman-Filter) erfolgen. Am Ende der Lebensdauer (oder schon etwas früher) mitgeteilt werden, dass das Gleitlager bald nicht mehr funktionsfähig sein wird (z.B. an Hand einer Warnlampe). Zusätzlich kann man aber auch im Betrieb die verbleibende Restlebensdauer unter den zurzeit herrschenden Betriebsbedingungen überwachen, so dass der Zeitpunkt des Eingreifens vom Personal selbst entschieden werden kann.

Reibungsereignisse, wie z.B. Mischreibungsereignisse oder Festkörperreibungsereignisse, gehören grundsätzlich zu einem Betriebsablauf eines Gleitlagers. Wenn diese Reibungsereignisse gehäuft oder zunehmend aufgetreten, zeigt dies an, dass das Gleitlager u.U. geschädigt ist oder sich auf dem Weg zu einer Schädigung befindet. Ab einem bestimmten Punkt besteht das Risiko des Fressens (seizure). Durch die hier vorgeschlagene Schätzung des Verschleißzustandes, der räumlich über den Umfang des Gleitlagers aufgelöst ist, bekommt man im Betrieb des Gleitlagers Informationen über den Zustand, ohne das Gleitlager auszubauen und zu inspizieren.

Das räumlich aufgelöste Verschleißmodell wird durch einen Schätzfilter, insbesondere einen Kalman-Filter, einen extended Kalman- Filter und / oder eine Regression gewonnen.

Zusätzlich kann in einer Ausführungsform die Anzahl der Reibungsereignisse gezählt werden und damit ein Signal zur Lebensdauerschätzung generiert werden. Dabei kann die absolute Häufigkeit der Reibungsereignisse ein Maß für den Verschleiß sein oder eine zeitliche Zunahme.

Dabei können die Reibungsereignisse Mischreibungs- und / oder Festkörperreibungsereignisse umfassen.

Ferner kann eine Korrelation der Häufigkeiten der Reibungsereignisse und / oder zwischen dem ermittelten Merkmal (aus dem Körperschall) und des Abnutzungsgrades durchgeführt werden.

Wenn aktuelle Betriebsdaten, insbesondere die Betriebsdauer, eine Temperatur, insbesondere eine Öltemperatur, Lastdaten, akustische Daten in Frequenzbereichen außerhalb der Reibungsereignisse und / oder eine gemessenen Drehzahl in die Lebensdauerschätzung eingehen, kann man die Lebensdauerschätzung als einen ständig aktualisierten Wert anzeigen. Auch kann durch die Berücksichtigung der Betriebsdaten die Schätzung selbst verbessert werden. Wenn z.B. Betriebsdaten von baugleichen und / oder bauähnlichen Gleitlagern in die Lebensdauerschätzung eingehen, kann man auch historische Erkenntnisse in die Lebensdauerschätzung einfließen lassen. Auch können á priori Informationen in die Lebensdauerschätzung eingehen.

In einer weiteren Ausführungsform wird am Gleitlager mit einer darin gelagerten, insbesondere darin drehenden Welle mindestens ein Mischreibungsereignis ermittelt. Die Ermittlung des mindestens einen Mischreibungsergebnisses kann bei drehenden Gleitlager und ruhender Welle oder drehender Welle und ruhendem Gleitlager erfolgen.

Es wird dabei mindestens ein zeitabhängiges Körperschallsignal des mindestens einen Körperschallsensors, insbesondere genau eines Körperschallsensors aufgenommen. Das Verfahren ist gerade auch mit nur einem Körperschallsensor durchführbar, so dass eine besonders wirtschaftliche Sensorik möglich ist.

Zunächst erfolgt eine Filterung des zeitabhängigen Körperschallsignals, um insbesondere andere mechanische Vibrationen zu unterdrücken. Das Körperschallsignal weist im Falle von Mischreibungsereignissen eine Amplitudenmodulation auf.

Anschließend erfolgt die Berechnung einer Hüllkurve für das gefilterte Körperschallsignal, wobei im Falle von Mischreibungsereignissen die Hüllkurven das amplitudenmodulierte Signal einhüllen.

Die Hüllkurve weist in der Regel noch scharfe Konturen, wie z.B. Zacken auf, so dass die Bestimmung der Maxima in der Hüllkurve, die die Mischreibungsereignisse anzeigen schwierig ist. Daher wird die Hüllkurve einer Glättung unterzogen.

Die Daten der geglätteten Hüllkurve werden mit einem Drehwinkelsignal, das von der Umdrehung der Welle im Gleitlager abhängig ist, kombiniert. Die Kombination wird auch als Fusionierung der Daten bezeichnet.

Damit kann die Periodizität der Maxima erkannt werden. Die Maxima, die die Mischreibungsereignisse anzeigen, treten in jeder Umdrehung der Welle in ähnlicher Form auf.

Es erfolgt dann eine Berechnung der lokalen Maxima aus den kombinierten Daten aus dem vorhergehenden Schritt für die Bestimmung einer Winkelangabe für die Mischreibungsereignisse am Umfang des Gleitlagers. Im Fall, dass nur ein Mischreibungsergebnis vorliegt, wird nur ein Maximum bestimmt.

Damit können Mischreibungsereignisse in einfacher und robuster Weise räumlich bestimmten Stellen im Gleitlager zugeordnet werden. Dies kann z.B. ein zeitbasierte Wartung um eine zustandsbasierten Wartung ergänzen, um eine erhöhte Sicherheit für Mensch, Maschine und Umwelt bieten zu können, die Maschinenlaufzeit zu verlängern und Wartungsarbeiten besser planen zu können.

Dabei kann in einer Ausführungsform das Drehwinkelsignal durch eine Mustererkennung oder einen Referenzimpuls durch einen Inkrementalgeber, insbesondere einen magnetischen Referenzimpuls bestimmt und / oder erzeugt werden.

Das Drehwinkelsignal kann auf unterschiedliche Weise erzeugt werden. In einer Ausführungsvariante wird das Drehwinkelsignal allein durch die Bewegung der Welle und / oder des Gleitlagers, insbesondere durch mindestens ein Magnetelement der Welle und / oder im Gleitlager und einem entsprechend zugeordneten Magnetsensor (z.B. eine Spule) generiert. Dies ist eine passive Generierung des Drehwinkelsignals allein durch die Relativbewegung von Welle und Gleitlager.

Zusätzlich oder alternativ kann das Drehwinkelsignal aktiv durch mindestens einen Impuls generiert werden, insbesondere einen Nullimpuls oder eine Vielzahl von Impulsen des Inkrementalgebers. Grundsätzlich ist ein Impuls, z.B. der Nullimpuls ausreichend. Wenn mehr Impulse verwendet werden, kann die Genauigkeit gesteigert werden.

Die Filterung des Körperschallsignals kann in einer Ausführungsform mit einem Hochpassfilter erfolgen, insbesondere mit einer cut-off Frequenz zwischen 50 und 300 kHz, insbesondere zwischen 80 und 150 kHz. Die Frequenzen von Mischreibungsereignissen unterscheiden sich von anderen mechanischen Vibrationen in einem Gleitlager, so dass die Mischreibungsereignisse gut aus dem gesamten Schwingungsspektrum herausfilterbar sind.

Ferner kann die Berechnung der Hüllkurve mittels einer Hilbert Transformation oder über eine Mitteilung über eine vorbestimmte Menge an gefilterten Körperschalldatenpunkten erfolgen

Die Hüllkurve kann in einer Ausführungsform durch einen Glättungsfilter, insbesondere durch einen Savitzky-Golay Filter geglättet werden.

In einer Ausführungsform erfasst und speichert ein Rechner die zeitabhängigen Daten über die Winkelangabe, den Winkelort, die Intensität und / oder die Dauer des mindestens einen Mischreibungsereignisses am Umfang des Gleitlagers und gibt bei dem Eintreten einer vorbestimmten Bedingung ein Signal ab, insbesondere ein Warnsignal oder ein Reparatursignal. Der Rechner kann z.B. erkennen, wenn eine bestimmte Anzahl Mischreibungsereignisse pro Umdrehung und / oder eine bestimmte räumliche Konzentration der Mischreibungsereignisse eingesetzt hat. Je nach dem betrachteten System, in das das Gleitlager integriert ist, können Bedingungen formuliert werden, die als akzeptabel oder eben nicht mehr akzeptabel betrachtet werden. Im letzteren Fall kann dann z.B. ein Signal abgegeben werden, dass ein mögliches Versagen des Gleitlagers anzeigt.

In einer Ausführungsform des Verfahrens ist das Gleitlager in einem Planetengetriebe angeordnet, insbesondere in einem Planetengetriebe in einem Fahrzeug, einer Windkraftanlage oder einem Flugzeugtriebwerk angeordnet. Planetengetriebe müssen in der Regel über längere Zeiträume wartungsfrei arbeiten, so dass eine Überwachung, insbesondere für eine mögliche Schadensvorhersage sinnvoll ist.

Auch können kinematische Bewegungsdaten und / oder Körperschallereignisse des Planetengetriebes, insbesondere die Bewegungsdaten und / oder Körperschallereignisse der Bewegungen von Sonnenrad, Planetenhalter und / oder Planetenrädern herausgefiltert werden. Die Frequenzbereiche dieser Ereignisse liegen häufig unterhalb des Frequenzbereiches, in dem Mischreibungsereignisse auftreten.

Die Aufgabe wird auch durch eine Vorrichtung zur Schätzung des Verschleißzustandes des Gleitlagers mit den Merkmalen des Anspruchs 14 gelöst.

Dabei ist mindestens ein zeitabhängiges Körperschallsignal von mindestens einem Körperschallsensor, insbesondere genau einem Körperschallsensor vom Gleitlager aufnehmbar.

Ein erstes Rechenmittel dient zur Ermittlung des zeitlichen Verlaufs mindestens eines Reibungsereignisses aus dem Körperschallsignal mittels eines mathematischen Reibungsereignismodells.

Ein zweites Rechenmittel bestimmt ein das mindestens eine Reibungsereignis charakterisierendes Maß basierend auf der zeitlichen Dauer des mindestens einen Reibungsereignisses, der Amplitude des mindestens einen Reibungsereignisses und / oder eines Integralmaßes über das mindestens eine Reibungsereignis.

Mit einem dritten Rechenmittel erfolgt dann die Kombination des über die Zeit akkumulierten Maßes mit einer Winkelangabe für das mindestens eine Reibungsereignis am Umfang des Gleitlagers. Durch diese Kombination kann ein räumlich aufgelöstes Verschleißmodell des Gleitlagers bestimmt werden, wobei ein Signalisierungsmittel zur Ausgabe eines Signals in Abhängigkeit vom Modell zur Charakterisierung des Verschleißzustands dient.

Mit einer solchen Vorrichtung, die z.B. in Form eines Mikroprozessors ausgebildet sein kann, ist eine effiziente Überwachung eines Gleitlagers auf Mischreibungsereignisse möglich.

Dabei kann in einer Ausführungsform der mindestens eine Körperschallsensor an der Stirnseite einer Halterung des Gleitlagers angeordnet sein.

In einer möglichen Bauform des mindestens einen Körperschallsensors wird ein Piezoelement zur Aufnahme des Körperschalls verwendet.

Für eine effiziente Erfassung des Körperschalls bei Mischreibungsereignissen kann der mindestens eine Körperschallsensor in unmittelbarer Nähe des Umfangs des Gleitlagers angeordnet sein, insbesondere in unmittelbarer Nähe einer Krafteinleitung.

In Zusammenhang mit den in den Figuren dargestellten Ausführungsbeispielen wird die Erfindung erläutert. Dabei zeigt

Fig. 1 ein schematisches Körperschallsignal bei Mischreibung zwischen einer Welle und einem Gleitlager mit einer Amplitudenmodulation;

Fig. 2 eine schematische Darstellung einer Ausführungsform zur Verschleißschätzung eines Gleitlagers mit einer Ermittlung der Winkelauflösung des Körperschallsignals;

Fig. 2A eine schematische Darstellung eines zeitabhängigen Körperschallsignals mit Mischreibungsereignissen;

Fig. 3 eine weitere Ausführungsform zur Verschleißschätzung eines Gleitlagers;

Fig. 4A eine Vorderansicht einer Ausführungsform einer Gleitlagervorrichtung;

Fig. 4B eine perspektivische Darstellung der Gleitlagervorrichtung nach Fig. 4A;

Fig. 4C eine weitere perspektivische Darstellung der Gleitlagervorrichtung nach Fig. 4B;

Fig. 5 eine schematische Darstellung eine Versuchsaufbaus für die Überwachung des Gleitlagers;

Fig. 6 ein Körperschallsignal und ein Z-Signal eines Inkrementalgebers für eine Gleitlagerung mit einer Drehzahl von 340 U / min bei Flüssigkeitsreibung;

Fig. 7 ein Körperschallsignal gemessen über zwei Umdrehungen einer Welle in einem Gleitlager mit vier Mischreibungsereignissen (Anstreifungen) pro Umdrehung;

Fig. 8 das Körperschallsignal nach Fig. 7 für eine Umdrehung mit Angabe der Winkel der Mischreibungsereignisse (Anstreifungen);

Fig. 9 eine Darstellung der Energie der Einhüllenden des Körperschallsignals und Z-Signals ohne Glättung;

Fig. 10 eine Darstellung der Energie der Einhüllenden des Körperschallsignals und Z-Signals mit Glättung;

Fig. 11 eine Ausführungsform der Überwachung eines Gleitlagers auf Mischreibungsereignisse in einem Planetengetriebe;

Fig. 12 eine weitere Ausführungsform der Überwachung eines Gleitlagers auf Mischreibungsereignisse in einem Planetengetriebe.

Im Folgenden wird die Überwachung von hydrodynamischen Gleitlagern auf Mischreibungsereignisse anhand mehrerer Ausführungsbeispiele beschrieben.

Ein hydrodynamisches Gleitlager 1 besitzt theoretisch eine unendliche Lebensdauer, solange die Welle 6 und der Belag des Gleitlagers 1 durch einen tragenden Schmierfilm voneinander getrennt sind. Sobald diese beiden Bauteile in Berührung kommen, entsteht mechanische Reibung (Mischreibung, Festkörperreibung), was letztlich zu einem Schaden führt. Das Gleitlager 1 kann dadurch seine Funktionsfähigkeit verlieren, da bei erhöhtem Abrieb oder einem Schaden kein tragender Schmierfilm mehr gebildet werden kann.

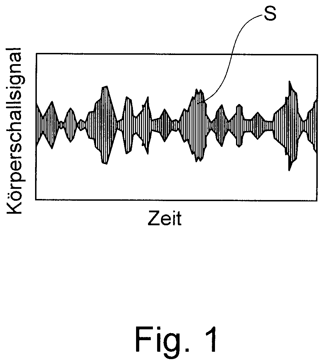

Im Folgenden werden Ausführungsformen zur Schätzung des Verschleißzustandes beschrieben, die in einem Schritt davon ausgehen, dass der zeitliche Verlauf eines Reibungsereignisses a, b, c, d aus einem Körperschallsignal S mittels eines mathematischen Reibungsereignismodells R bestimmt wird. Daher wird in den Fig. 1 bis 9 zunächst dargestellt, wie die aus erfassten Körperschall, Reibungsereignisse a, b, c, d, insbesondere Mischreibungsereignisse ermittelt werden.

Eine bekannte Methode zur Überwachung hydrodynamischer Gleitlager 1 verwendet Wellenumlaufbahnplots (sogenannte Shaft Orbit-Plots, siehe J. Deckers, "Entwicklung einer Low-Cost Körperschallsensorik zur Überwachung des Verschleißverhaltens von wälz- oder gleitgelagerten Kreiselpumpen kleiner Leistung", Dissertation, Gerhard Mercator-Universität Duisburg, Duisburg, 2001)

Dabei wird durch zwei orthogonal am Gleitlager 1 angebrachte Positionssensoren die Wellenumlaufbahn innerhalb des Gleitlagers erfasst. Die dabei erfassten zwei phasenverschobenen Positionssignale werden in Polarkoordinatendarstellung in sogenannten Orbit-Plots dargestellt. Diese Plots stellen die drehwinkelabhängige Bewegung der gelagerten Welle 6 quer zur axialen Wellenachse dar.

Zur Erfassung der Phasenlage wird ein sogenannter Keyphasor (Referenzgeber) verwendet.

Tritt die Welle 6 nun aus der zulässigen Umlaufbahn heraus, so hat eine Anstreifung (d.h. ein Mischreibungsereignis) zwischen Welle 6 und dem Belag des Gleitlagers 1 stattgefunden. Dies ist im Wellenumlaufplot erkennbar.

Mit dieser Methode kann nicht nur ein Anstreifvorgang identifiziert werden, sondern auch die Intensität und die Position der Berührung in Umfangsrichtung des Gleitlagerbelags ermittelt werden. Im Folgenden wird von Mischreibungsereignissen a, b, c, d, gesprochen, wobei die technische Lehre nicht auf diese Art der Reibungsuntersuchung beschränkt ist.

Die gegenseitige Berührung von Rauhigkeitsspitzen der beiden Gleitpartner bei einem Mischreibungsereignis (Anstreifvorgang) verursacht im Gleitlager 1 Körperschall mit einer Frequenz von bis zu 2 MHz.

Die Verwendung einer Körperschallanalyse bietet gegenüber anderen Diagnoseverfahren Vorteile hinsichtlich der Früherkennung von Lagerschäden am Gleitlager 1 (siehe M. Fritz, A. Burger und A. Albers, "Schadensfrüherkennung an geschmierten Gleitkontakten mittels Schallemissionsanalyse," Institut für Maschinenkonstruktionslehre und Kraftfahrzeugbau, Bericht, Universität Karlsruhe, 2001; P. Raharjo, "An Investigation of Surface Vibration, Airborne Sound and Acoustic Emission Characteristics of a Journal Bearing for Early Fault Detection and Diagnosis," Dissertation, University of Huddersfield, Mai 2013)

Durch geeignete Signalverarbeitungs- und Merkmalsextraktionsalgorithmen kann die nicht lebensdauerbeeinflussende Flüssigkeitsreibung von der lebensdauermindernden Misch- und Festkörperreibung unterschieden werden. Die zur Diagnose eingesetzten Algorithmen mittels Körperschall bewerten den Reibungszustand jedoch nur global und nicht lokal über den Umfang des Gleitlagers 1, d.h. es fehlt an einer winkelaufgelösten Feststellung der Mischreibungsereignisse a, b, c, d.

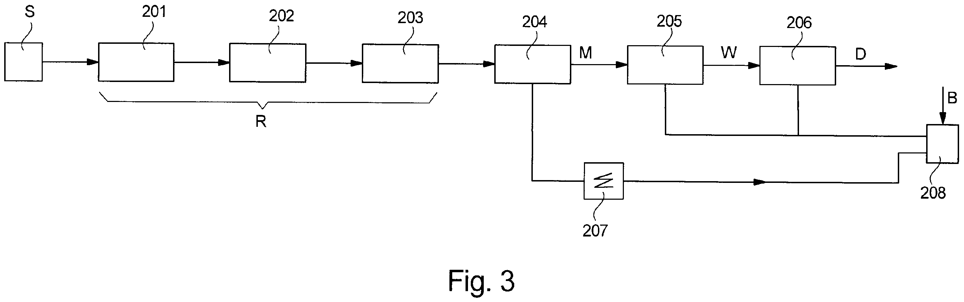

Für die Charakterisierung des Verschleißzustandes von Gleitlagern 1 ist aber die Kenntnis über lokale Mischreibungsvorgänge a, b, c, d essentiell. Eine wiederholte Reibung an z.B. an der Position a=20° (z.B. in Fig. 3A eingezeichnet) verringert die Lebensdauer des Gleitlagers 1 stärker als über den Umfang verteilte Reibungsvorgänge gleicher Anzahl.

Ein Phänomen, welches bei der Überlagerung eines hochfrequenten Trägersignals und eines niederfrequenten Nutzsignals auftritt, ist die Amplitudenmodulation.

Bei einer lokalen Berührung der Welle 6 und dem Belag des Gleitlagers 1 kommt es ebenfalls zu einer Amplitudenmodulation des Körperschallsignals (siehe M. Leahy, D. Mba, P. Cooper, A. Montgomery und D. Owen, "Experimental investigation into the capabilities of acoustic emission for the detection of shaft-to-seal rubbing in !arge power generation turbines," Proceedings of the Institution of Mechanical Engineers, Part J: Journal of Engineering Tribology, Bd. 220, Nr. 7, p. 607-615, 2006; A. Albers und M. Dickerhof, "Simultaneous Monitoring of Rolling-Element and Journal Bearings Using Analysis of Structure-Born Ultrasound Acoustic Emissions," in International Mechanical Engineering Congress & Exposition, Vancouver, British Columbia, Canada, 2010.)

Die Mischreibungsereignisse a, b, c, d treten in Abhängigkeit von der Drehzahl der Welle 6 auf. Die Mischreibungsereignisse a, b, c, d selbst erzeugen jeweils ein Körperschallsignal, das deutlich höherfrequent ist, als die Drehfrequenz der Welle 6. In der Summe wird ein Körperschallsignal S aufgenommen, bei sich eine niederfrequente Drehfrequenz und ein höherfrequentes Körperschallsignal überlagern.

Der schematische Signalverlauf des Körperschallsignals S ist in Fig. 1 erkennbar. Die entstehenden Modulationen unterscheiden sich in der Amplitude und Dauer.

Bei reiner Flüssigkeitsreibung, bei der keine Anstreifvorgänge zwischen Welle 6 und dem Belag des Gleitlagers 1 stattfinden, treten keine Amplitudenmodulationen auf.

Wie oben erwähnt, stellt die genaue Umfangsposition (d.h. der Winkel a), bei der die Mischreibungsereignisse a, b, c, d auftreten, eine auch für die Lebensdauerprognose eine wichtige Information dar. Die Akkumulation von Mischreibungsereignissen a, b, c, d an einer Umfangsposition kann somit als Maß für den Verschleiß des Gleitlagerbelags interpretiert werden. Auch kann die Lebensdauerprognose verbessert werden. Man kann z.B. auch das Integral über jeweils eine Umdrehung bilden und hat damit die Intensität und Dauer des Reibungsereignisses mitbeachtet.

Bei einer entsprechenden Überwachung sollen die Komplexität der Messkette als auch die Kosten für die Herstellung eines Produkts (hier das Diagnose- bzw. Prognosesystem) so gering wie möglich gehalten werden. Eine Reduzierung der Sensorzahlen, idealerweise die Verwendung nur eines Sensors, vereinfacht die Messkette und erlaubt auch eine deutliche Kostenreduzierung.

Im Folgenden werden Ausführungsformen beschrieben, die verschiedenen Eigenschaften des erfassten Körperschallsignals S verwenden, um Mischreibungsereignisse a, b, c, d zu detektieren.

Eine Hüllkurve, auch Einhüllende genannt, hüllt eine Kurvenschar (z.B. die eines Köperschallsignals S gemäß Fig. 1) ein. So entsteht eine neue Kurve, mit der es möglich ist, eine Aussage über lokale Maxima und Minima des auf das hochfrequente Signal modulierten niederfrequenten Signals zu treffen. Eine Hüllkurve kann z.B. mit einer Hilbert Transformation bestimmt werden (siehe D. Guicking, Schwingungen: Theorie und Anwendung in Mechanik, Akustik, Elektrik und Optik, Göttingen: Springer Vieweg: Springer Fachmedien Wiesbaden, 2016.).

Für die hier vorgestellte Anwendung ist es jedoch vollkommen ausreichend die das Verhalten der Amplituden für die Bestimmung der Einhüllende zu kennen. Es muss lediglich erkannt werden, wo lokale Maxima und Minima auftreten. Die Hüllkurve wird dadurch ermittelt, in dem das RMS (root mean square, quadratisches Mittel über eine vorbestimmte Menge an Datenpunkten bestimmt wird. Alternativ kann auch eine Hilbert-Transformation verwendet werden. Damit liegt auch ein Maß für die Energie des Körperschallsignals vor, wobei jeweils die Scheitelwerte und die Kurvenform berücksichtigt werden.

Die aus einer Einhüllenden entstandene Kurve ist mit Krümmungen und / oder scharfen Kanten versehen, welche für eine Aussage über lokale Maxima und Minima geglättet werden sollten. Dazu können z.B. Näherungspolynome niedriger Ordnung verwendet werden, um eine möglichst gute Glättung zu realisieren. Eine Möglichkeit der Glättung ist die Verwendung des Savitzky-Golay-Filters (siehe A. Savitzky und M. J. E. Golay, "Smoothing and Differentiation of Data by Simplified Least Squares Procedures," Anal. Chem., July 1964).

Dieses Verfahren glättet ein Signal durch stückweise Anpassung einer Polynomfunktion an das Signal. Diese Anpassung geschieht durch die Methode der kleinsten Quadrate zwischen der Matrix X und dem Vektor y:

$$y = X\,b$$

Die Lösung für b mit Hilfe der kleinsten Quadrate ist

$$b = (X^T X)^{-1}\, X^T y.$$

Die für die Glättung zur Anwendung kommenden geschätzten Werte $\hat{Y}$, sind:

$$\hat{Y} = Xb = X(X^T X)^{-1}\, X^T y = Hy$$

Nachfolgend werden zunächst Ausführungsformen für das Verfahren zur Mischreibungslokalisation über den Umfang des Gleitlagerbelags mittels Körperschallmessung genauer erläutert.

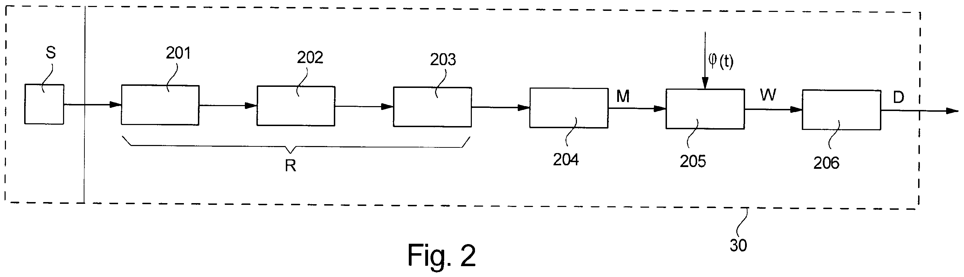

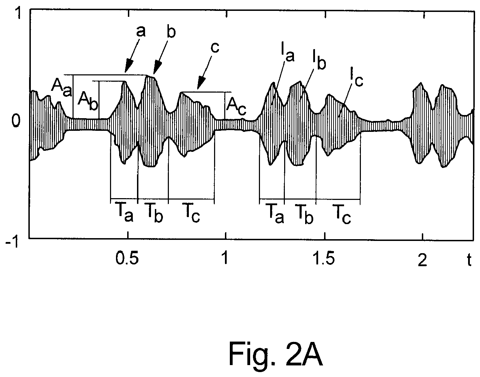

In Fig. 2 sind Ausführungsschritte zur Ermittlung von Mischreibungsereignissen a, b, c, d beschrieben.

Das amplitudenmodulierte Körperschallsignal S wird in einem ersten Schritt 201 hochpassgefiltert, um Störsignale aus der Umgebung und Signale, die nichts mit den Mischreibungsereignissen a, b, c, d zu tun haben, weitestgehend zu dämpfen. Im vorliegenden Fall wird eine cut-off Frequenz von 100 kHz verwendet. In anderen Ausführungsformen können auch andere cut-off Frequenzen verwendet werden. Generell sind cut-off Frequenzen im Bereich 50 bis 300 kHz sinnvoll, da die Mischreibungsereignisse zum größten Teil oberhalb dieser cut-off Frequenzen liegen.

Im nachfolgenden Schritt 202 wird die Einhüllende des Körperschallsignals S z.B. mittels Hilbert Transformation gebildet. Das hier verwendete Verfahren bildet über eine bestimmte Anzahl B von Signalpunkten $n_i$ (z.B. 800) den Mittelwert und speichert diesen Wert in einem Vektor.

Wie oben erläutert, kann bei einer Verwendung des RMS die Energie der Einhüllenden bestimmt werden, die jedoch mit scharfen Krümmungen oder Zacken versehen ist. Um die lokalen Maxima und Minima numerisch eindeutiger ermitteln zu können, kann z.B. ein Savitzky-Golay-Filter 3. Ordnung zur Glättung des Körperschallsignals S verwendet werden (Schritt 203). In anderen Ausführungsformen können auch andere Filter verwendet werden.

Damit wurde, unter Verwendung eines ersten Rechenmittels ein zeitlicher Verlauf anhand eines mathematischen Reibungsereignismodells R ermittelt.

Anschließend erfolgt in Schritt 204 unter Verwendung eines zweiten Rechenmittels die Bestimmung eines das mindestens eine Mischreibungsereignis a, b, c, d charakterisierende Maß M basierend auf der zeitlichen Dauer $T_a$, $T_b$, $T_c$, $T_d$ des Mischreibungsereignisses a, b, c, d, der Amplitude $A_a$, $A_b$, $A_c$, $A_d$ des einen Reibungsereignisses a, b, c, d und / oder eines Integralmaßes über das Reibungsereignis a, b, c, d.

Die Maße werden im Zusammenhang mit Fig. 2A näher erläutert. Dabei wird in Fig. 2A schematisch ein zeitabhängiges Körperschallsignal gezeigt, mit dem mittels der Schritte 201, 202 und 203 drei Mischreibungsereignisse a, b, c identifiziert. Die Zuordnung zur den Winkelbereichen des Umfangs des Gleitlagers 1 wird in der Folge noch erläutert.

Die drei periodisch auftretenden Mischreibungsereignisse a, b, c weisen jeweils unterschiedliche Längen $T_a$, $T_b$, $T_c$ auf, d.h. sie sind ein Maß für die Reibungskontaktzeit über den Umfang des Gleitlagers 1. Die zeitlichen Längen sind somit ein Maß für die Größe des Berührungswinkels. Je kleiner der Berührungswinkel ist, desto größer ist die Kurtosis des Signals, bei gleichbleibender Intensität. Die Kurtosis beschreibt die Steilheit oder Spitzheit des Signals. Bei einem größer werdenden Berührungswinkel nimmt die Kurtosis ab. Die Kurtosis kann somit als Maß M für die Dauer der Mischreibungsereignisse verwendet werden.

Zusätzlich oder alternativ kann auch die Intensität der Mischreibungsereignisse a, b, c als Maß M für die Mischreibungsereignisse a, b, c verwendet werden. Die Intensität kann z.B. über die Amplituden $A_a$, $A_b$, $A_c$ (siehe Fig. 2A) oder dem RMS-Wert bestimmt werden.

Auch ist es möglich, ein Integralmaß zu verwenden, wie z.B. das Integral über die Zeiten $T_a$, $T_b$, $T_c$, zu bestimmen, so dass man ein kombiniertes Maß M erhält, das die Dauer und die Amplitude gleichermaßen berücksichtigt. Auch kann das Integral über eine quadrierte Fläche (mit oder ohne Zeitgewichtung) bestimmt werden, bei dem größere Amplituden stärker (bei Zeitgewichtung auch länger anhaltende Ereignisse) berücksichtigt werden.

In jedem Fall erhält man Maßzahlen, die gewichtet oder ungewichtet, die Dauer und Intensität der Mischreibungsereignisse charakterisieren.

Anschließend erfolgt in Schritt 205 durch ein drittes Rechenmittel die Kombination des über die Zeit akkumulierten Maßes M mit einer Winkelposition φ(t) für die Mischreibungsereignisse a, b, c am Umfang des Gleitlagers zur Bestimmung eines räumlich aufgelösten Verschleißmodells W des Verschleißmodell des Gleitlagers 1.

Im Folgenden wird beschrieben, wie in einer Ausführungsform die Winkelposition φ(t) bestimmt werden kann.

In der dargestellten Ausführungsform wird ein Inkrementalgeber dazu verwendet, Impulse auf das Gleitlager 1 abzugeben. Diese Impulse sind Drehwinkelsignale Z, die von der Umdrehung der Welle 6 im Gleitlager 1 abhängig sind.

Das Nullimpulssignal (Z-Signal) des Inkrementalgebers wird in dieser Anwendung zur Identifikation der genauen Winkelposition φ(t) der Mischreibungsereignisse a, b, c, d verwendet. Zwischen zwei Rechtecksignalen eines Inkrementalgebers findet genau eine Umdrehung der Welle 6 im Gleitlager 1 statt. Beide Signale, sowohl das Köperschallsignal S als auch das Z-Signal Z, werden zeitgleich aufgenommen (Schritt 205). Für eine verbesserte Genauigkeit können auch mehr als ein Impulssignal pro Umdrehung verwendet werden.

Bei der Überlagerung des verarbeiteten Körperschallsignals S und des Z-Signals Z (Schritt 205) kann eine genaue Zuordnung der Maxima - resultierend aus dem Körperschall der Mischreibungsereignisse - zu der Winkelposition gemacht werden (Schritt 206), wobei ein Signal D in Abhängigkeit vom Modelverschleißmodel W ausgegeben wird, das z.B. an eine Steuerung eines Triebwerks übermittelt wird.

Die Bearbeitung und Auswertung der Signale kann mit einem Rechner 30 erfolgen. Die Signale des Körperschallsensors 3 können in üblicher Weise, ggf. über einen Verstärker zu dem Rechner 30 übertragen werden. In Fig. 2 ist dargestellt, dass der Rechner alle Schritte ausführt. Es ist auch möglich, dass der Rechner 30 dezentral arbeitet, so dass einzelne Schritte von Teilen des Rechners 30 von dezentralen Prozessoren durchgeführt werden.

Jedes Maximum repräsentiert dabei ein Anstreifen der Welle an den Gleitlagerbelag, d.h. ein Mischreibungsereignis a, b, c. Mit der Kenntnis des Signals über die gemessenen Winkelpositionen kann jedem Maximum ein Winkel zugeordnet werden, der die Anstreifstelle (d.h. das Mischreibungsereignis a, b, c) im Belag des Gleitlagers 1 kennzeichnet.

In Fig. 3 ist eine weitere Ausführungsform dargestellt, bei der das Verfahren und die Vorrichtung gemäß Fig. 2 ergänzt wird; auf die Beschreibung der Fig. 2 kann daher Bezug genommen werden.

In Schritt 203 werden die einzelnen Mischreibungsereignisse a, b, c identifiziert. In einem Zähler (Schritt 207) werden diese einzeln gezählt und es wird eine Summe gebildet. Dabei kann mit Hilfe von Merkmalen (RMS, Hüllkurve, Kurtosis) und Mustererkennung ermittelt werden, ob Mischreibung vorliegt (oder Festkörperreibung). Es wird nicht zwingend unterscheiden zwischen Ort, Dauer und Intensität. Auftretende Mischreibungsereignisse werden dann hochgezählt, bis ein kritischer Wert erreicht ist. Danach erfolgt die Ausgabe eines Warnsignals.

Zusammen mit dem Ergebnis des Schritts 206 und / oder des Signals D wird die Restlebensdauer geschätzt (Schritt 208). Dabei können auch aktuellen Betriebsdaten B einfließen.

Das Zählergebnis E kann aber auch separat ausgegeben und angezeigt werden.

Wenn das Verfahren zur Schätzung des Verschleißzustandes z.B. in einem Triebwerk eingesetzt wird, so könnten als aktuelle Betriebsdaten z.B. Temperaturen wie die Öltemperatur in einem Planetengetriebe, Lastdaten, akustische Daten in Frequenzbereichen außerhalb der Reibungsereignisse und / oder eine Drehzahl in die Lebensdauerschätzung eingehen. Wäre z.B. das Triebwerk durchweg sehr schonend betrieben worden, z.B. durch wenige Starts und Landungen, so würde eine vergleichsweise lange Lebensdauer angezeigt werden. Sollte sich das Betriebsverhalten ändern, da z.B. mehr Kurzstrecken geflogen werden, würde sich das in einer geschätzt verkürzten Lebensdauer bemerkbar machen.

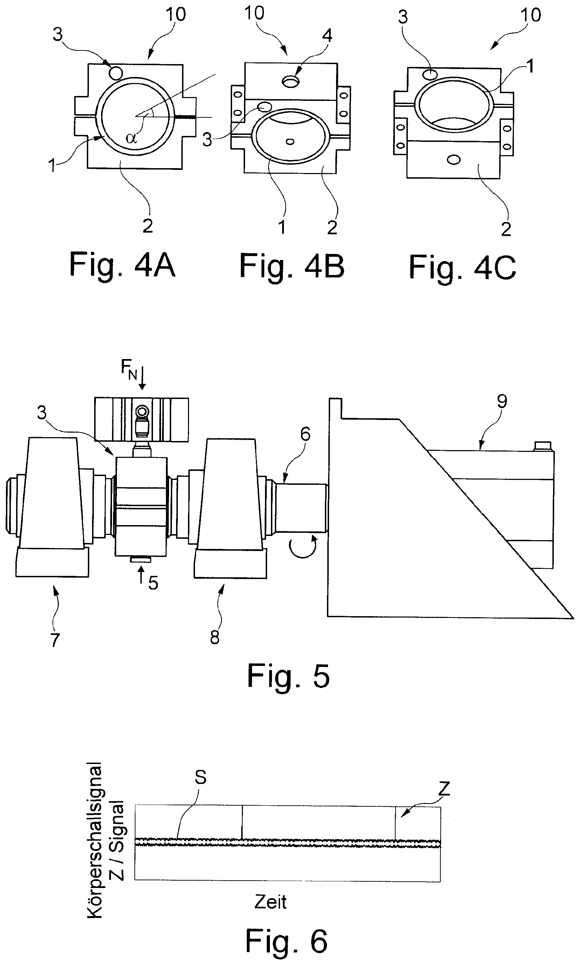

Im Folgenden werden Ergebnisse dargestellt, bei denen sowohl Mischreibung als auch - zum Vergleich - Flüssigkeitsreibung auftraten. Dazu wurde Ausführungsformen verwendet, die in Fig. 4A, 4B, 4C und Fig. 5 dargestellt sind.

Eine Gleitlagervorrichtung 10 ist in Fig. 4A in einer Vorderansicht, in den Fig. 4B und 4C jeweils in einer perspektivischen Ansicht dargestellt. Das eigentliche Gleitlager 1 (d.h. die Gleitlagerbuchse) ist dabei einer Halterung 2 eingebettet, die auch den Körperschallsensor 3 aufweist. Im vorliegenden Fall bilden die Halterung 3, das Gleitlager 1 und der Körperschallsensor 3 eine Gleitlagervorrichtung 10. In anderen Ausführungsformen kann die Gleitlagervorrichtung 10 auch aus anderen Bauteilen, insbesondere auch aus mehr Bauteilen gebildet sein.

Bei der dargestellten Ausführungsform ist nur ein Körperschallsensor 3 erforderlich, der in der dargestellten Ausführungsform seitlich etwas aus der Mitte versetzt, in der Nähe des Umfangs des Gleitlagers 1 und an der Vorderseite der Gleitlagervorrichtung 10 angeordnet ist. Der im Betrieb des Gleitlagers 1 erzeugte Körperschall wird durch die Festkörper gut zum Körperschallsensor 3 übertragen. Dabei ist es sinnvoll, den Körperschallsensor 3 in der Nähe einer äußeren Krafteinleitung anzuordnen. Als Körperschallsensor 3 kann z.B. ein Physical Acoustics WD 100-900 kHz Breitband Sensor eingesetzt werden. Der Körperschallsensor 3 kann ein Piezoelement aufweisen.

In der dargestellten Ausführungsform erfolgt eine Krafteinleitung $F_N$ (d.h. eine Lagerlast) von oben (siehe Fig. 4) auf die Halterung 3 des Gleitlagers 1, die dafür eine Auflagebohrung 4 aufweist. Eine Ölversorgungszuleitung 5 befindet auf der gegenüberliegenden Seite der Halterung 3.

In Fig. 5 ist ferner dargestellt, dass eine Welle 6 - gelagert in zwei Stützlagern 7, 8 - durch das Gleitlager 1 geführt wird. Die Welle 6 wird durch einen Elektromotor 9 angetrieben.

Es wird erwartet, dass es im Betrieb des Gleitlagers 1 bei der Flüssigkeitsreibung zu keiner Modulation im erhaltenen Signal kommt, da kein Anstreifen der Welle 6 und des Belag des Gleitlagers 1 stattfindet. Bei Mischreibungsereignissen sollte eine Modulation im Signal zu erkennen sein.

Unter konstanter Last $F_N$ wurde eine absteigende Drehzahlrampe gefahren. Jede Drehzahl wurde für drei Sekunden gehalten. Damit ist es möglich, bei konstanter Last $F_N$ von der Flüssigkeitsreibung, welche in hohen Drehzahlen vorkommt, in den Bereich der Mischreibung zu fahren.

Beispielhaft sind in Fig. 6 für eine konstante Last $F_N$ von 1500 N und einer Drehzahl von 340 U / min das Körperschallsignal S und das Z-Signal Z des Inkrementalgebers dargestellt. In diesem Bereich findet Flüssigkeitsreibung statt; es sind keine Modulationen im Signal zu erkennen.

Das Z-Signal Z ist das Signal des Inkrementalgebers und wird einmal pro Umdrehung als Rechtecksignal ausgegeben. Zwischen zwei Rechtecksignalen findet genau eine Umdrehung der Welle 6 statt.

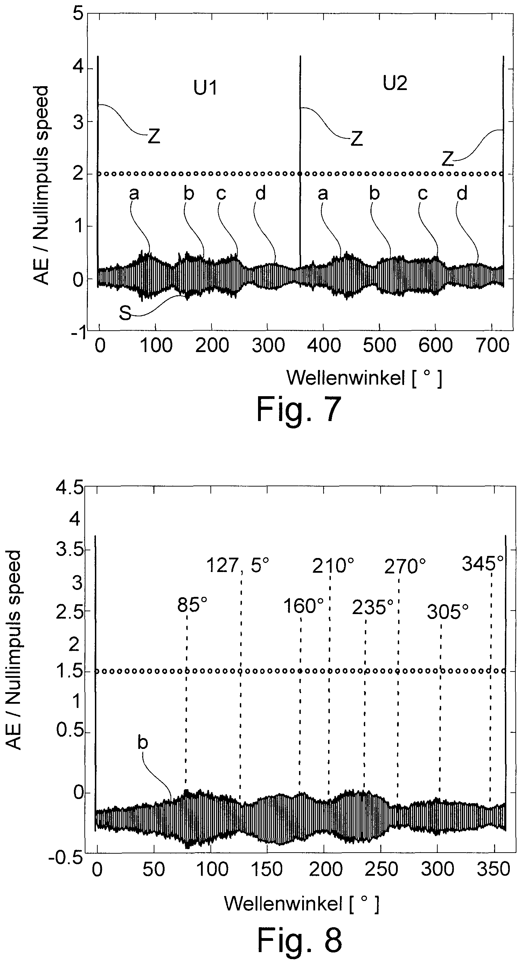

Die Fig. 7 zeigt das Körperschallsignal S und drei Z-Signale Z ebenfalls für eine Last $F_N$ von 1500 N jedoch für eine Drehzahl von 80 U / min. In Fig. 7 sind zwei vollständige Umdrehungen U1, U2 dargestellt

Offensichtlich finden Mischreibungsereignisse a, b, c, d zwischen Welle 6 und dem Belag des Gleitlagers 1 statt. In Fig. 7 ist die Modulation im Signal erkennbar. An vier verschiedenen Stellen a, b, c, d, innerhalb einer Umdrehung ist es jeweils zu einem Anstreifen gekommen, d.h. es liegen Mischreibungsereignisse a, b, c, d vor.

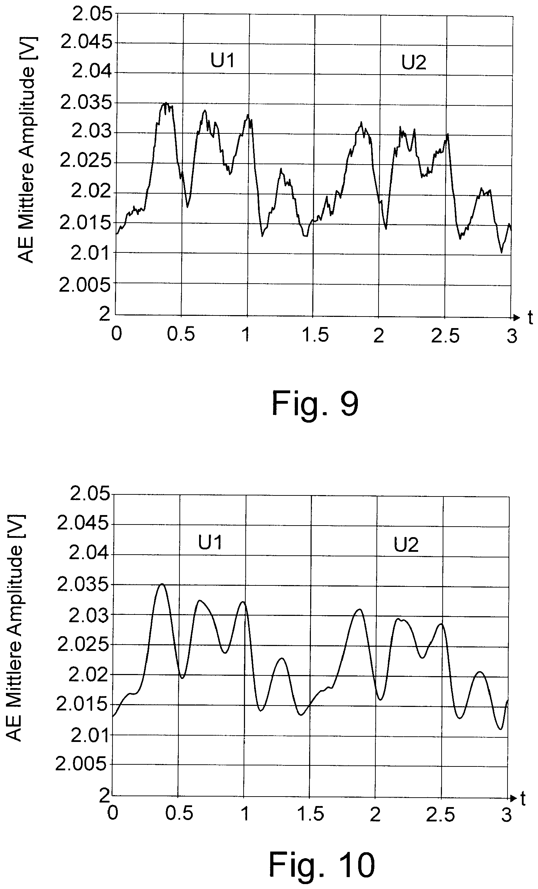

In Fig. 8 sind für eine Umdrehung U1 die Maxima und Minima im Körperschallsignal angegeben und Winkeln am Umfang des Gleitlagers 1 zugeordnet. Die Bestimmung der Maxima und Minima war oben schon erläutert worden und wird im Zusammenhang mit der Fig. 9 noch weiter erläutert.

Dieses Körperschallsignal S wird im Folgenden mit einer Ausführungsform des Verfahrens bearbeitet, wie es z.B. im Zusammenhang mit Fig. 2 oder 3 dargestellt ist. Dies bedeutet, dass das Signal mit einem Hochpassfilter gefiltert wird und die Einhüllende anschließend mittels einer Mittelung (Schritt 202) bestimmt wird.

Auf der x-Achse der Fig. 9 und 10 ist die Zeit aufgetragen.

In Fig. 9 ist die Energie (d.h. abhängig von RMS) der Einhüllenden des gefilterten Körperschallsignals S für zwei Umdrehungen U1, U2 dargestellt. Das Z-Signal Z liegt naturgemäß zwischen den beiden Umdrehungen U1, U2.

Da die Maxima numerisch bestimmt werden sollen, wird die Einhüllende des Körperschallsignals S mit dem Savitzky-Golay-Filter geglättet (Fig. 2, 3).

Das nun entstandene Signal ist in Fig. 10 zu sehen. Nun kann jedem Maximum (und Minimum) durch die Verwendung des Nullimpulssignals eine Winkelposition am Umfang des Gleitlagers 1 zugeordnet werden. Dies war bereits in Fig. 8 eingezeichnet worden.

Aus obigen Beschreibungen ist klar, dass damit ein Gleitlager 1 effizient auf Anstreifungen (d.h. Mischreibungsereignisse a, b, c, d) überwacht werden kann, indem in der Nähe des Gleitlagers 1 ein Körperschallsensor 3 angeordnet ist. Zusammen mit dem Impulsgeber und einem Rechner zur Auswertung der Daten, kann so z.B. ein Gleitlager 1 in einem Motor oder einem Flugzeugtriebwerk effizient überwacht werden.

Im Folgenden wird als eine mögliche Anwendung für die Überwachung von Gleitlagern 1 in einem epizyklischen Planetengetriebe 20 dargestellt.

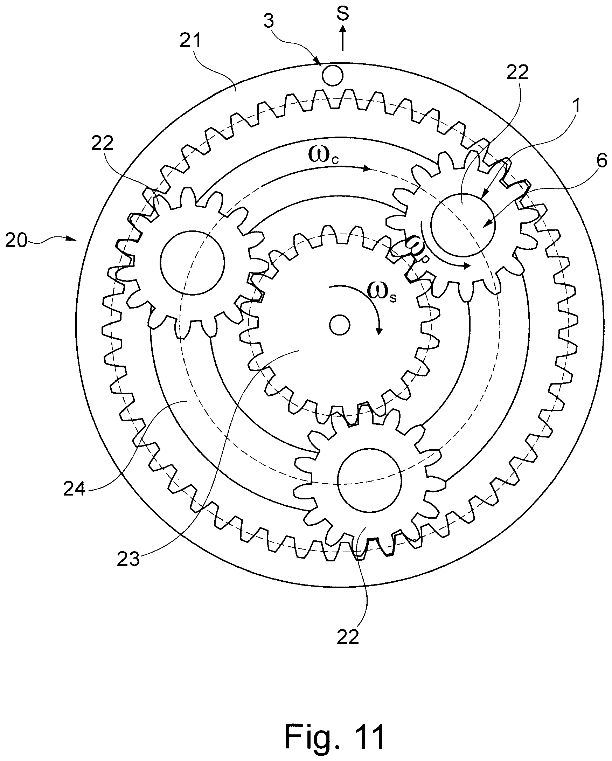

Fig. 11 zeigt in schematischer Weise in einer Frontalansicht ein epizyklisches Planetengetriebe 20 mit einem Hohlrad 21, drei Planetenrädern 22, einem Sonnenrad 23 und einem Carrier 24 (auch Planetenträger genannt). Ein solches Planetengetriebe 20 kann z.B. einem Turbo-Fantriebwerk als Untersetzungsgetriebe eingebaut werden.

Der Antrieb des Planetengetriebes 20 kann über das Sonnenrad 23 erfolgen, das mit der Winkelgeschwindigkeit $\omega_s$ dreht. Die Planetenräder 22 rollen auf dem Sonnenrad 23 und in dem hier als feststehend angenommenen Hohlrad 21 ab. Die Wellen 6 der Planetenräder 22 sind auf dem Carrier 24 mittels Gleitlagern 1 gelagert, so dass sich die Planetenräder 22 mit einer Winkelgeschwindigkeit $\omega_P$ drehen. Der Carrier 24, über den in der dargestellten Ausführungsform der Abtrieb des Planetengetriebes 20 erfolgt, dreht sich um die Achse des Sonnenrades 23 mit der Winkelgeschwindigkeit $\omega_C$.

In der Ausführungsform gemäß Fig. 11 ist ein Körperschallsensor 3 in etwa mittig am oberen Rand am Hohlrad 21 eingebaut. Der Körperschall der Gleitlager 1 wird von diesem empfangen. Die Daten des Körperschallsignals S können vom Körperschallsensor 3 über eine Leitung oder auch drahtlos an einen hier nicht dargestellten Rechner 30 übertragen werden.

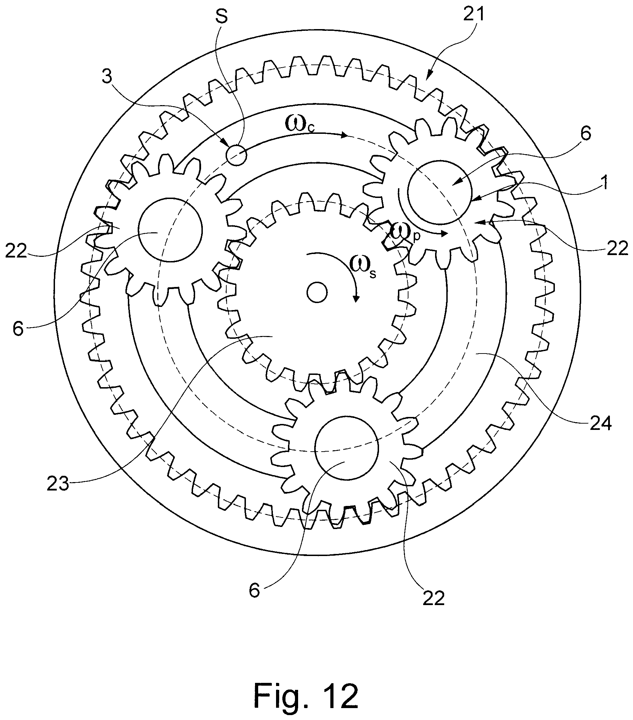

Alternativ kann der Körperschallsensor 3 auch am mitrotierenden Carrier 24 angeordnet sein, wie dies in Fig. 12 dargestellt ist. Hier ist aber eine drahtlose Datenübertragung der Körperschalldaten aus dem Gehäuse des Planetengetriebes 20 sinnvoll. Ansonsten ist die Funktion der Überwachung des Gleitlagers 1 wie in der Ausführungsform gemäß Fig. 10.

Die Darstellung des epizyklischen Planetengetriebes 20 ist hier nur beispielhaft zu verstehen. In anderen Ausführungsformen können z.B. fünf oder mehr Planetenräder verwendet werden. Auch ist es möglich, dass eine andere Kinematik gewählt wird, d.h. Antrieb und Abtrieb unterscheiden sich von dem Beispiel der Fig. 10 und 11. Insbesondere ist es möglich, dass hier beschriebenen epizyklischen Planetengetriebes 20 andere Bauformen verwendet werden. Die Überwachung der Gleitlager 1 erfolgt in analoger Weise.

**Bezugszeichenliste**

| | |
|---|---|
| 1 | Gleitlager |
| 2 | Halterung Gleitlager |
| 3 | Körperschallsensor |
| 4 | Auflagebohrung für Krafteinleitung |
| 5 | Ölversorgungsleitung |
| 6 | Welle |
| 7 | erstes Stützlager |
| 8 | zweites Stützlager |
| 9 | Elektromotor |
| 10 | Gleitlagervorrichtung |
| | |
| 20 | Planetengetriebe |
| 21 | Hohlrad |
| 22 | Planetenräder |
| 23 | Sonnenrad |
| 24 | Carrier |
| 30 | Rechner |
| | |
| a, b, c, d | Anstreifstellen, Reibungsereignisse |
| $A_a$, $A_b$, $A_c$, $A_d$ | Amplitude eines Reibungsereignisses |
| B | aktuelle Betriebsdaten |
| D | Ausgabesignal |
| E | Zählergebnis |
| $F_N$ | eingeleitete Kraft |
| $I_a$, $I_b$, $I_c$ | Integralmaß über ein Reibungsereignis |
| M | Maß für Reibungsereignis |
| R | Reibungsereignismodell |
| S | Körperschallsignal |
| $T_a$, $T_b$, $T_c$, $T_d$ | zeitliche Dauer eines Reibungsereignisses |
| W | Verschleißmodell |
| Z | Signal Impulsgeber |

**Patentansprüche**

1. Verfahren zur Schätzung des Verschleißzustandes eines Gleitlagers (1) mit einer darin gelagerten, insbesondere darin drehenden Welle (6), wobei mindestens ein zeitabhängiges Körperschallsignal (S) des Gleitlagers (1) von mindestens einem Körperschallsensor (3), insbesondere genau einem Körperschallsensor (3) aufgenommen wird,
**gekennzeichnet durch**

   a) eine Ermittlung (201, 202, 203) des zeitlichen Verlaufs mindestens eines Reibungsereignisses (a, b, c, d) aus dem Körperschallsignal (S) mittels eines mathematischen Reibungsereignismodells (R),

   b) eine Bestimmung (204) eines Maßes (M), das mindestens ein Reibungsereignis basierend auf der zeitlichen Dauer ($T_a$, $T_b$, $T_c$, $T_d$) des mindestens einen Reibungsereignisses (a, b, c, d), der

Amplitude ($A_a$, $A_b$, $A_c$, $A_d$) des mindestens einen Reibungsereignisses (a, b, c, d) und / oder eines Integralmaßes ($I_a$, $I_b$, $I_c$,) über das mindestens eine Reibungsereignis (a, b, c, d) charakterisiert,

c) Kombination (205) des über die Zeit akkumulierten Maßes (M) mit einer Winkelangabe ($\varphi(t)$) für das mindestens eine Reibungsereignis (a, b, c, d) am Umfang des Gleitlagers (1) zur Bestimmung eines räumlich aufgelösten Verschleißmodells (W) des Gleitlagers (1), wobei das räumlich aufgelöste Verschleißmodell (W) durch einen Schätzfilter gewonnen wird, und

d) Ausgabe (206) eines Signals (D) in Abhängigkeit vom Verschleißmodell (W) zur Charakterisierung des Verschleißzustands.

2. Verfahren nach Anspruch 1, **dadurch gekennzeichnet, dass** das räumlich aufgelöste Verschleißmodell (W) durch einen Kalman-Filter, einen extended Kalman- Filter und / oder eine Regression gewonnen wird.

3. Verfahren nach Anspruch 1 oder 2, **dadurch gekennzeichnet, dass**

    die Anzahl der Reibungsereignisse (a, b, c, d) gezählt (207) wird und damit ein Signal zur Lebensdauerschätzung (208) generiert wird, und / oder

    die Reibungsereignisse (a, b, c, d) Mischreibungs- und / oder Festkörperreibungsereignisse umfassen.

4. Verfahren nach mindestens einem der vorhergehenden Ansprüche, **dadurch gekennzeichnet, dass** eine Korrelation der Häufigkeiten der Reibungsereignisse (a, b, c, d) und / oder zwischen dem ermittelten Merkmal (aus dem Körperschall) und des Abnutzungsgrades durchgeführt wird.

5. Verfahren nach mindestens einem der vorhergehenden Ansprüche, **dadurch gekennzeichnet, dass**

    aktuelle Betriebsdaten, insbesondere die Betriebsdauer, eine Temperatur, insbesondere eine Öltemperatur, Lastdaten, akustische Daten in Frequenzbereichen außerhalb der Reibungsereignisse (a, b, c, d) und / oder eine gemessenen Drehzahl in die Lebensdauerschätzung eingehen, und / oder

    Betriebsdaten von baugleichen und / oder bauähnlichen Gleitlagern in die Lebensdauerschätzung eingehen und / oder

    á priori Informationen in die Lebensdauerschätzung eingehen.

6. Verfahren nach mindestens einem der vorhergehenden Ansprüche, **dadurch gekennzeichnet, dass** das Reibungsereignismodell (R) ein Hüllkurvenmodell ist, dass durch folgende Schritte ermittelt wird:

    a) eine Filterung (201) des Körperschallsignals (S),
    b) eine anschließende Berechnung (202) einer Hüllkurve für das gefilterte Körperschallsignal (S),
    c) eine anschließende Glättung (203) der Hüllkurve.

7. Verfahren nach Anspruch 6, **dadurch gekennzeichnet, dass** die Winkelangabe für das mindestens eine Reibungsereignis (a, b, c, d) aus dem Hüllkurvenmodell ermittelt wird, in dem

    a) eine Kombination (205) der Daten für die geglättete Hüllkurve mit einem Drehwinkelsignal (Z) durchgeführt wird, das von der Umdrehung der Welle (6) im Gleitlager (1) abhängig ist,
    b) eine Berechnung mindestens eines Maximums durchgeführt wird, das mit dem mindestens einen Reibungsereignis (a, b, c, d) korreliert, aus den kombinierten Daten aus Schritt a) für die Bestimmung einer Winkelangabe für das mindestens eine Reibungsereignis (a, b, c, d) am Umfang des Gleitlagers (1).

8. Verfahren nach Anspruch 7, **dadurch gekennzeichnet, dass** das Drehwinkelsignal (Z) durch eine Mustererkennung oder einen Referenzimpuls durch einen Inkrementalgeber, insbesondere einen magnetischen Referenzimpuls bestimmt und / oder erzeugt wird.

9. Verfahren nach Anspruch 6 oder 7, **dadurch gekennzeichnet, dass** das Drehwinkelsignal (Z) allein durch die Bewegung der Welle (6) und / oder des Gleitlagers (1), insbesondere durch mindestens ein Magnetelement der Welle (6) und / oder im Gleitlager (1) und einem entsprechend zugeordneten Magnetsensor.

10. Verfahren nach mindestens einem der Ansprüche 6 bis 9, **dadurch gekennzeichnet, dass** das Drehwinkelsignal (Z) aktiv durch mindestens einen Impuls generiert wird, insbesondere einen Nullimpuls oder eine Vielzahl von Impulsen des Inkrementalgebers.

11. Verfahren nach mindestens einem der Ansprüche 6 bis 10, **dadurch gekennzeichnet, dass**

    die Filterung (201) einen Hochpassfilter aufweist, insbesondere mit einer cut-off Frequenz zwischen 50 und 300 kHz, insbesondere zwischen 80 und 150 kHz, und / oder
die Berechnung (202) der Hüllkurve mittels einer Hilbert Transformation oder durch eine Mitteilung über eine vorbestimmte Menge an gefilterten Körperschalldatenpunkten (S) erfolgt, und / oder
die Hüllkurve durch einen Glättungsfilter, insbesondere einen Savitzky-Golay Filter geglättet (204) wird.

12. Verfahren nach mindestens einem der vorhergehenden Ansprüche, **dadurch gekennzeichnet, dass** das Gleitlager (1) in einem Planetengetriebe (20), insbesondere einem Planetengetriebe (20) in einer Windkraftanlage, einem Fahrzeug oder Flugzeugtriebwerk angeordnet ist.

13. Verfahren nach mindestens einem der vorhergehenden Ansprüche, **dadurch gekennzeichnet, dass** kinematische Bewegungsdaten und / oder Körperschallereignisse des Planetengetriebes, insbesondere die Bewegungsdaten und / oder Körperschallereignisse der Bewegungen von Sonnenrad, Planetenhalter und / oder Planetenrädern herausgefiltert werden.

14. Vorrichtung zur Schätzung des Verschleißzustandes eines Gleitlagers (1) mit einer darin gelagerten, insbesondere darin drehenden Welle (6) auf mindestens ein Reibungsereignis (a, b, c, d), wobei mindestens ein zeitabhängiges Körperschallsignal (S) von mindestens einem Körperschallsensor (3), insbesondere genau einem Körperschallsensor (3) vom Gleitlager (1) aufnehmbar ist, mit

einem ersten Rechenmittel zur Ermittlung des zeitlichen Verlaufs mindestens eines Reibungsereignisses (a, b, c, d) aus dem Körperschallsignal (S) mittels eines mathematischen Reibungsereignismodells (R),

einem zweiten Rechenmittel zur Bestimmung eines das mindestens eine Reibungsereignis charakterisierende Maß (M) basierend auf der zeitlichen Dauer $(T_a, T_b, T_c, T_d)$ des mindestens einen Reibungsereignisses (a, b, c, d), der Amplitude $(A_a, A_b, A_c, A_d)$ des mindestens einen Reibungsereignisses (a, b, c, d) und / oder eines Integralmaßes $(I_a, I_b, I_c, I_d)$ über das mindestens eine Reibungsereignis (a, b, c, d),

einem dritten Rechenmittel zur Kombination des über die Zeit akkumulierten Maßes (M) mit einer Winkelangabe für das mindestens eine Reibungsereignis (a, b, c, d) am Umfang des Gleitlagers (1) zur Bestimmung eines räumlich aufgelösten Verschleißmodells (W) des Gleitlagers (1), wobei das räumlich aufgelöste Verschleißmodell (W) durch einen Schätzfilter gewonnen wird, und

einem Signalisierungsmittel zur Ausgabe eines Signals (D) in Abhängigkeit vom Modell (W) zur Charakterisierung des Verschleißzustands.

15. Vorrichtung nach Anspruch 14, **dadurch gekennzeichnet, dass**

der mindestens eine Körperschallsensor (3) an der Stirnseite einer Halterung (2) des Gleitlagers (1) angeordnet ist und / oder
der mindestens eine Körperschallsensor (3) ein Piezoelement zur Aufnahme des Körperschalls aufweist und / oder
der mindestens eine Körperschallsensor (3) in unmittelbarer Nähe des Umfangs des Gleitlagers (3) angeordnet ist, insbesondere in unmittelbarer Nähe einer Krafteinleitung $(F_N)$ angeordnet ist.

Fig. 1

Fig. 2

Fig. 2A

Fig. 3

Fig. 4A    Fig. 4B    Fig. 4C

Fig. 5

Körperschallsignal Z / Signal

Zeit

Fig. 6

Fig. 7

Fig. 8

Fig. 9

Fig. 10

Fig. 11

Fig. 12

**Europäisches Patentamt**
**European Patent Office**
**Office européen des brevets**

## EUROPÄISCHER RECHERCHENBERICHT

**Nummer der Anmeldung**

EP 19 19 8856

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2015/059478 A1 (KLOS HANS-HENNING [DE] ET AL) 5. März 2015 (2015-03-05) <br> * Zusammenfassung; Abbildungen 1,2 * <br> * Absätze [0009] - [0032] * <br> ----- | 1-15 | INV. <br> G01M13/045 <br> G01N29/14 <br> G01N29/40 <br> G01N29/44 |
| A | US 2015/177100 A1 (DIETZ VOLKER [DE]) 25. Juni 2015 (2015-06-25) <br> * Zusammenfassung; Abbildungen 1-4 * <br> * Absätze [0160] - [0167] * <br> ----- | 1,14 | |
| A | US 6 298 725 B1 (FORRESTER B DAVID [AU]) 9. Oktober 2001 (2001-10-09) <br> * Zusammenfassung; Abbildungen 1, 2a,2b * <br> * Spalte 3, Zeile 25 - Spalte 7, Zeile 4 * <br> ----- | 1,6,14 | |

**RECHERCHIERTE SACHGEBIETE (IPC)**

G01M
G01N

Der vorliegende Recherchenbericht wurde für alle Patentansprüche erstellt

| Recherchenort | Abschlußdatum der Recherche | Prüfer |
|---|---|---|
| München | 19. Februar 2020 | Uttenthaler, Erich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 8856

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2020

| Im Recherchenbericht angeführtes Patentdokument | Datum der Veröffentlichung | Mitglied(er) der Patentfamilie | Datum der Veröffentlichung |
|---|---|---|---|
| US 2015059478 A1 | 05-03-2015 | CN 104246247 A<br>EP 2805072 A1<br>US 2015059478 A1<br>WO 2013156068 A1 | 24-12-2014<br>26-11-2014<br>05-03-2015<br>24-10-2013 |
| US 2015177100 A1 | 25-06-2015 | CN 104520578 A<br>DE 102012015654 A1<br>US 2015177100 A1<br>WO 2014023275 A1 | 15-04-2015<br>15-05-2014<br>25-06-2015<br>13-02-2014 |
| US 6298725 B1 | 09-10-2001 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Entwicklung einer Low-Cost Körperschallsensorik zur Überwachung des Verschleißverhaltens von wälz- oder gleitgelagerten Kreiselpumpen kleiner Leistung. **J. DECKERS.** Dissertation. Gerhard Mercator-Universität Duisburg, 2001
- Schadensfrüherkennung an geschmierten Gleitkontakten mittels Schallemissionsanalyse. **M. FRITZ, A. BURGER ; A. ALBERS.** Institut für Maschinenkonstruktionslehre und Kraftfahrzeugbau, Bericht. Universität Karlsruhe, 2001
- An Investigation of Surface Vibration, Airborne Sound and Acoustic Emission Characteristics of a Journal Bearing for Early Fault Detection and Diagnosis. **P. RAHARJO.** Dissertation. University of Huddersfield, Mai 2013

- **M. LEAHY ; D. MBA, P. COOPER ; A. MONTGOMERY ; D. OWEN.** Experimental investigation into the capabilities of acoustic emission for the detection of shaft-to-seal rubbing in !arge power generation turbines. *Proceedings of the Institution of Mechanical Engineers, Part J: Journal of Engineering Tribology,* 2006, vol. 220 (7), 607-615
- **A. ALBERS ; M. DICKERHOF.** Simultaneous Monitoring of Rolling-Element and Journal Bearings Using Analysis of Structure-Born Ultrasound Acoustic Emissions. *International Mechanical Engineering Congress & Exposition,* 2010
- Schwingungen: Theorie und Anwendung. **D. GUICKING.** Mechanik, Akustik, Elektrik und Optik. Springer Vieweg: Springer Fachmedien, 2016
- **A. SAVITZKY ; M. J. E. GOLAY.** Smoothing and Differentiation of Data by Simplified Least Squares Procedures. *Anal. Chem.,* Juli 1964